# EUROPÄISCHE PATENTSCHRIFT

(11) **EP 3 486 334 B1**
(45) Veröffentlichungstag und Bekanntmachung des Hinweises auf die Patenterteilung: **16.06.2021**
(21) Anmeldenummer: 17202728.6
(22) Anmeldetag: 21.11.2017
(51) Int. Cl.: C14C 13/02, C14C 11/00, C14C 3/06, C14C 9/04, C08G 18/08

(54) **LEDER FÜR MEDIZINISCHE ANWENDUNGEN**
LEATHER FOR MEDICAL APPLICATIONS
CUIR À USAGE MÉDICALE

(43) Veröffentlichungstag der Anmeldung: 22.05.2019
(73) Patentinhaber: Helcor-Leder-Tec GmbH, 37619 Hehlen (DE)
(72) Erfinder: Hecht, Hilmar, 37619 Bodenwerder (DE); Roth, Nina, 31832 Springe (DE); Eilers, Carsten, 37619 Bodenwerder (DE)
(74) Vertreter: Freischem & Partner Patentanwälte mbB

(56) Entgegenhaltungen:
- DE-A1- 3 737 955
- US-A1- 2010 281 622
- DATABASE WPI Week 201774 Thomson Scientific, London, GB; AN 2017-68877H XP002779735, & CN 107 034 689 A (FORMOSAN RUBBER GROUP INC) 11. August 2017 (2017-08-11)
- DATABASE WPI Week 201704 Thomson Scientific, London, GB; AN 2016-72883L XP002779736, & CN 106 120 362 A (SUZHOU RUIGAO NEW MATERIAL CO LTD) 16. November 2016 (2016-11-16)

## Beschreibung

Die Erfindung betrifft ein Trägermaterial und insbesondere ein Leder für medizinische Anwendungen, ein Verfahren zum Beschichten von Leder und die Verwendung des beschichteten Trägermaterials für medizinische Anwendungen.

Bislang gibt es die Herausforderung, dass in gegerbten Ledern gesundheitsschädliche Substanzen wie zum Beispiel Chromverbindungen enthalten sein können, die aus dem Leder oder der Beschichtung des Leders heraustreten können und deshalb für medizinische Anwendungen wie Patientenliegen nicht zugelassen sind. In Deutschland müssen diese Oberflächen die Tests nach DIN 10993-10 bestehen. Dies bedeutet im Wesentlichen, dass eine Zellkultur auf der Oberfläche innerhalb einer gewissen Zeit nicht absterben darf.

EP 2 711 438 A2 beschreibt ein Verfahren zum Beschichten von Leder. Hierbei liegt die Offenbarung darin, dass möglichst nichts in das Leder eindringen kann. Die dort beschriebene Beschichtung verhindert leider nicht das Austreten der gesundheitsgefährdenden Substanzen von gegerbtem Leder, so dass der Test nach DIN 10993-10 mit dieser Beschichtung nicht bestanden werden konnte.

DE 37 37 955 A1 beschreibt ein Verfahren zur Lederbehandlung.

CN 106 120 362 A beschreibt ein medizinisches Kunstleder und Verfahren zu seiner Herstellung.

Die Aufgabe der vorliegenden Erfindung ist es, eine Technologie bereitzustellen, mit welcher Trägermaterialien und insbesondere Leder so beschichtet werden können, dass sie für medizinische Anwendungen geeignet sind und gesundheitsgefährdende Stoffe nicht mehr aus dem Trägermaterial bzw. Leder austreten können.

In einer ersten Ausführungsform wird die der Erfindung zugrunde liegende Aufgabe durch ein beschichtetes Trägermaterial, nämlichLeder, für medizinische Anwendungen gelöst, wobei die Beschichtung wenigstens zwei Beschichtungsschichten aufweist, dadurch gekennzeichnet, dass die Inhaltsstoffe des Leders fixiert sind, wobei die Beschichtung ein Flächengewicht in einem Bereich von 300 bis 600 g/m² aufweist.

Vorzugsweise ist das Trägermaterial und insbesondere Leder erfindungsgemäß dann für medizinische Anwendungen geeignet, wenn es die Tests nach DIN 10993-10 (2014) zur Prüfung auf Irritation und Hautsensibilisierung besteht.

Vorzugsweise sind die Inhaltsstoffe des Trägermaterials, insbesondere des Leders, durch Einstellen, insbesondere Absenken, des pH-Wertes während des Gerbens oder Nachgerbens fixiert, insbesondere bevorzugt auf einen pH Wert in einem Bereich von pH 3 bis pH 4,5.

### Trägermaterial

Das Trägermaterial ist Leder.

Das Trägermaterial und insbesondere Leder ist vorzugsweise ein Spaltleder. Das Trägermaterial und insbesondere Leder ist vorzugsweise ein Rindsspaltleder. Die Stärke des Trägermaterials und insbesondere Leders liegt vorzugsweise in einem Bereich von 0,8 bis 2 mm. Die Größe des Trägermaterials und insbesondere Leders liegt vorzugsweise in einem Bereich von 1 bis 3 m².

Die mittlere Rauheit Rₐ des unbeschichteten bzw. nicht zugerichteten Trägermaterials und insbesondere Leders kann vorzugsweise in einem Bereich von 20 bis 400 µm, ganz besonders bevorzugt in einem Bereich von 30 bis 150 µm liegen. Die mittlere Rauheit kann beispielsweise mit einem Nanovea ST400 3D Profilometer gemäß ISO 4287 bzw. DIN 4768 bestimmt werden. Die mittlere Rauheit Rₐ entspricht dem arithmetischen Mittel der betragsmäßigen Abweichung von der Mittellinie.

Das unbeschichtete bzw. nicht zugerichtete Trägermaterial und insbesondere Leder ist vorzugsweise rau und weist vorzugsweise eine spezifische Oberfläche von wenigstens 2 m² pro 1 m² Grundfläche des Trägermaterials und insbesondere Leders, ganz besonders bevorzugt eine spezifische Oberfläche von wenigstens 5 m² pro 1 m² Grundfläche des Trägermaterials und insbesondere Leders auf. Die spezifische Oberfläche kann beispielsweise gemäß Gasadsorption - BET-Verfahren nach DIN ISO 9277:2014-01 ermittelt werden.

Die hohe spezifische Oberfläche und die Rauheit haben den Vorteil, dass sich die Grundierungsschicht der Beschichtung auf dem Trägermaterial besser verankern und in einer höheren Menge aufgetragen werden kann, wodurch eine geschlossene Oberfläche erreicht wird.

Vorzugsweise ist das Trägermaterial, insbesondere das Leder nachchromiert. Überraschend hat sich herausgestellt, dass eine Nachchromierung dazu führt, dass weniger gesundheitsgefährdende Stoffe aus der erfindungsgemäßen Oberfläche-austreten. Dies ist nicht intuitiv gewesen, da die Nachchromierung ja in der Regel mit gesundheitsgefährdenden Stoffen durchgeführt wird.

### Beschichtung

Die Beschichtung weist vorzugsweise eine geschlossene Oberfläche auf. Besonders bevorzugt weist die Beschichtung keine Kapillaren oder andere Löcher auf. Das beschichtete Trägermaterial ist vorzugsweise porenfrei.

Die Beschichtung (beispielsweise auch Zurichtung) weist vorzugsweise eine Dicke in einem Bereich von 100 bis 300 µm auf. Diese besondere Geschlossenheit der Beschichtung verhindert besonders gut das Austreten von gesundheitsschädlichen Stoffen aus dem Trägermaterial.

Die Beschichtung weist vorzugsweise ein Flächengewicht in einem Bereich von mehr als 400 bis 500 g/m² auf. Dieses Flächengewicht der Beschichtung verhindert ebenfalls besonders gut das Austreten von gesundheitsschädlichen Stoffe aus dem Trägermaterial.

Die Beschichtung kann vorzugsweise aus wenigstens zwei, insbesondere drei Schichten bestehen: einer Oberschicht (auch Appretur genannt) als äußerster Beschichtungsschicht und/oder einer Mittelschicht und einer Verbindungsschicht (nämlich Verbindung der Oberschicht und ggf. Mittelschicht zum Trägermaterial; auch Grundierung genannt). Die Dicke der Oberschicht beträgt vorteilhaft zwischen 30 und 45% und jene der Mittelschicht und der Verbindungsschicht gemeinsam vorzugsweise zwischen 70 und 55% des Gesamtaufbaus der Beschichtung. Die Oberschicht ist also beispielsweise die äußerste Beschichtungsschicht.

Jede der wenigstens zwei oder drei Schichten kann beispielsweise überwiegend aus einem vernetzten und durch Trocknung verfestigten Polyurethan gebildet sein, das auch modifiziert sein kann. Das Polyurethan kann auch vernetzt sein. Jede der wenigstens zwei oder drei Schichten kann auch weitere übliche Additive und übliche Komponenten enthalten.

Die getrocknete Oberschicht weist vorzugsweise ein Flächengewicht in einem Bereich von 50 bis 100 g/m², ganz besonders bevorzugt in einem Bereich von mehr als 60 bis 90 g/m² auf.

Die getrocknete Mittelschicht weist vorzugsweise ein Flächengewicht in einem Bereich von 50 bis 90 g/m², ganz besonders bevorzugt in einem Bereich von mehr als 60 bis 80 g/m² auf.

### Oberschicht

Die Oberschicht enthält vorzugsweise überwiegend ein Polyurethan, das auch modifiziert sein kann. Das Polyurethan kann auch vernetzt sein. Das Polyurethan kann vorzugsweise ein Polyester- und/oder Polyether-Polyurethan-Elastomer sein. Vorzugsweise liegt das Polyurethan als wässrige Dispersion vor.

Die Oberschicht kann auch weitere Additive wie Verlaufsmittel, Pigmente oder Griffmittel enthalten.

Vorzugsweise enthält die Oberschicht weniger als 0,01 Gew.% Lösungsmittel, ganz besonders bevorzugt kein Lösungsmittel.

### Weitere Ausführungsformen

Die zuvor beschriebenen bevorzugten Ausführungsformen erstrecken sich, sofern für den Fachmann sinnvoll anwendbar, auch auf die folgenden weiteren Ausführungsformen.

In einer weiteren Ausführungsform wird die der Erfindung zugrunde liegende Aufgabe durch ein Verfahren zum Beschichten von Trägermaterial und insbesondere Leder gelöst, bei dem als Beschichtung wenigstens zwei Beschichtungsschichten aufgetragen werden, dadurch gekennzeichnet, dass die Inhaltsstoffe des Trägermaterials, insbesondere des Leders, vor der Beschichtung fixiert werden.

Vorzugsweise handelt es sich bei dem Verfahren um ein Verfahren zur Herstellung der Oberfläche des erfindungsgemäß beschichteten Trägermaterials.

Das Verfahren gleicht vorzugsweise in weiten Teilen den in den Patentanmeldungen wie beispielsweise EP 0 105 046 und DE 2008 100 893.4 beschriebenen Verfahren, sofern in dieser Patentanmeldung nicht abweichend beschrieben.

Vorzugsweise wird die Oberschicht im Rahmen des Verfahrens zunächst auf eine Silikonmatrize mit einer Oberschicht-Zusammensetzung (auch Formulierung für die Oberschicht) aufgebracht.

Zunächst wird also vorzugsweise eine Silikonmatrize bereitgestellt. Die Silikonmatrize weist auf ihrer Oberfläche vorzugsweise die negative Oberflächenstruktur der nachher erwünschten Trägermaterialoberfläche auf. Wünscht man sich also eine Oberfläche wie ein Narbenleder vom Kalb, gestaltet man die Oberfläche der Silikonmatrize beispielsweise wie die Negativform der Oberfläche des Narbenleders vom Kalb. Im einfachsten Fall formt man hierzu bei der Herstellung der Silikonmatrize beispielsweise das Narbenleder vom Kalb ab. Die Silikonmatrize hat vorzugsweise eine Dicke in einem Bereich von 0,5 bis 3 mm. Die Silikonmatrize kann zur Verstärkung beispielsweise auf einer Metall-, Holz-, DMF-, beschichteten Pressspan- oder Kunststoffplatte angeordnet sein.

In einem weiteren Schritt wird vorzugsweise auf diese Silikonmatrize eine Oberschicht (später auf dem Trägermaterial die äußerste Beschichtungsschicht) mit einer Oberschicht-Zusammensetzung, vorzugsweise eine aliphatische Polyurethandispersion (PU Dispersion), aufgebracht, um die Oberschicht zu erzeugen. Vorzugsweise wird diese Oberschicht-Zusammensetzung aufgesprüht und anschließend unter Zuführung vom Wärme und damit einhergehendem Wasserentzug getrocknet.

Unmittelbar vor dem Aufsprühen der Oberschicht-Zusammensetzung wird die Silikonmatrize vorzugsweise auf eine Temperatur in einem Bereich von 55 bis 105 °C, vorzugsweise 60 - 80 °C erwärmt.

Die Oberschicht-Zusammensetzung ist vorzugsweise eine Dispersion und kann vorzugsweise einen Anteil an Dispersionsmedium in einem Bereich von 50 bis 70 Gew.%, und im Übrigen disperse Phase aufweisen. Das Dispersionsmedium ist vorzugsweise Wasser.

Der nichtflüchtige Anteil der Dispersion entspricht vorzugsweise der dispersen Phase.

Die einzelnen Bestandteile können vorzugsweise auch schon fertig als Dispersion eingesetzt werden. Dadurch muss kein Wasser zugefügt werden und die Bestandteile können im flüssigen Zustand leichter dosiert werden.

Das Bindemittel liegt vorzugsweise als wässrige Dispersion mit einem Feststoffgehalt in einem Bereich von 30 bis 50 Gew.% vor.

Ein Griffmittel kann vorzugsweise als wässrige Dispersion mit einem Feststoffgehalt in einem Bereich von 60 bis 75 Gew.% vorliegen.

Etwaige Pigmente liegen vorzugsweise als wässrige Dispersion mit einem Feststoffgehalt in einem Bereich von 50 bis 80 Gew.% vor.

Ein Vernetzer kann vorzugsweise als Dispersion mit einem Feststoffgehalt in einem Bereich von 70 bis 90 Gew.% vorliegen. Das Dispersionsmedium des Vernetzers ist vorzugsweise aprotisch und polar, ganz besonders bevorzugt ein Acetat (wie beispielsweise Propylenglykoldiacetat).

Die Oberschicht-Zusammensetzung enthält vorzugsweise
a) 100 Gewichtsteile Bindemittel-Dispersion, vorzugsweise ausgewählt aus Polycarbonat, Polyester-Polyurethan, Polylether-Polyurethan, Polyacrylat und/oder Mischungen derselben, und
b) 1 bis 20 Gewichtsteile Dispersionen mit Zuschlagstoffen ausgewählt aus Vernetzern, Griffmitteln, Mattiermitteln, Pigmenten, Weichmachern, Emulgatoren, Netzmitteln, Verlaufmitteln, Füllstoffen und/oder Mischungen derselben.

Vorzugsweise kann die Oberschicht-Zusammensetzung 0,1 bis 10 Gewichtsteile Griffmitteldispersion enthalten.

Vorzugsweise kann die Oberschicht-Zusammensetzung 1 bis 10 Gewichtsteile Vernetzerdispersion enthalten.

Vorzugsweise kann die Oberschicht-Zusammensetzung 1 bis 10 Gewichtsteile Pigmentdispersion enthalten.

Die Oberschicht-Zusammensetzung enthält vorzugsweise
a) 30 bis 50 Gewichtsteile Bindemittel als Feststoff, vorzugsweise ausgewählt aus Polycarbonat, Polyester-Polyurethan, Polyether-Polyurethan, Polyacrylat und/oder Mischungen derselben, und
b) 1 bis 20 Gewichtsteile Zuschlagstoffe ausgewählt aus Vernetzern, Griffmitteln, Mattiermitteln, Pigmenten, Weichmachern, Emulgatoren, Netzmitteln, Verlaufmitteln, Füllstoffen und/oder Mischungen derselben, und
c) 30 bis 90 Gewichtsteile Wasser.

Der Anteil an Bindemittel, beispielsweise Polyurethan als Feststoff, in der Oberschicht-Zusammensetzung liegt vorzugsweise bei 40 Gewichtsteilen. Füllstoffe können beispielsweise Mikrohohlkugeln (z.B. gasgefüllt aus Kunststoff) sein.

Der Anteil an Vernetzer in der Oberschicht-Zusammensetzung liegt vorzugsweise in einem Bereich von 1,0 bis 10 Gewichtsteilen, ganz besonders bevorzugt in einem Bereich von 3 bis 6 Gewichtsteilen. Der Vernetzer ist vorzugsweise ein reaktives, aliphatisches Polyisocyanat.

Die Oberschicht-Zusammensetzung ist also vorzugsweise eine Dispersion, die 0,5 bis 8 Gewichtsteile, besonders bevorzugt 1 bis 4 Gewichtsteile Vernetzer auf 40 Gewichtsteile Bindemittel als Feststoff enthält.

Vorzugsweise wird als Vernetzer ein reaktives, aliphatisches Polyisocyanat eingesetzt.

Der Anteil an Griffmittel in der dispersen Phase der Oberschicht-Zusammensetzung liegt vorzugsweise in einem Bereich von 0,5 bis 8 Gewichtsteilen, ganz besonders bevorzugt in einem Bereich von 1 bis 4 Gewichtsteilen. Das Griffmittel kann ein Silikon bzw. Polysiloxan sein.

Die Oberschicht-Zusammensetzung ist also vorzugsweise eine Dispersion, die in der dispersen Phase 0,5 bis 8 Gewichtsteile, besonders bevorzugt 1 bis 4 Gewichtsteile, Griffmittel auf 40 Gewichtsteile Bindemittel als Feststoff enthält.

Vorzugsweise enthält die Oberschicht-Zusammensetzung in der dispersen Phase weniger als 0,01 Gewichtsteile Lösungsmittel, ganz besonders bevorzugt kein Lösungsmittel.

Die Oberschicht-Zusammensetzung wird vorzugsweise in einer Menge in einem Bereich von 150 bis 250 g/m² (insbesondere bevorzugt auf die Silikonmatrize) aufgetragen, besonders bevorzugt aufgesprüht.

Anschließend wird die aufgebrachte Oberschicht-Zusammensetzung vorzugsweise getrocknet. Diese Trocknung geschieht vorzugsweise bei einer Temperatur in einem Bereich von 60 bis 90 °C, insbesondere bevorzugt in einem Bereich von 70 bis 80 °C. Die Dauer der Trocknung liegt vorzugsweise in einem Bereich von 60 bis 240 s.

Anschließend kann vorzugsweise eine Mittelschicht-Zusammensetzung aufgebracht werden, um die Mittelschicht zu erzeugen. Die Mittelschicht - Zusammensetzung enthält vorzugsweise kristalline Struktur aufweisende aliphatische Polyester- und/oder Polyether-Polyurethandispersionen und/oder Polyacrylatdispersionen, und/oder deren Mischungen. Vorzugsweise liegt der Feststoffanteil in der Mittelschicht-Zusammensetzung in einem Bereich von 30 bis 50 Gew.%. Das Dispersionsmedium ist vorzugsweise Wasser.

Die Mittelschicht -Zusammensetzung wird vorzugsweise in einer Menge in einem Bereich von 140 bis 250 g/m² (insbesondere bevorzugt auf die auf der Silikonmatrize durch Trocknung verfestigte Oberschicht-Zusammensetzung) aufgetragen, besonders bevorzugt aufgesprüht.

Anschließend wird die aufgebrachte Mittelschicht -Zusammensetzung vorzugsweise getrocknet und damit verfestigt. Diese Trocknung geschieht vorzugsweise bei einer Temperatur in einem Bereich von 40 bis 80 °C, insbesondere bevorzugt in einem Bereich von 50 bis 60 °C. Die Zeit der Trocknung liegt vorzugsweise in einem Bereich von 60 bis 240 s.

Vorzugsweise wird auf das Trägermaterial, insbesondere bevorzugt auf das Spaltleder, eine Verbindungsschicht-Zusammensetzung aufgetragen, um die Verbindungsschicht zu erzeugen. Die Verbindungsschicht-Zusammensetzung kann beispielsweise eine der Mittelschicht-Zusammensetzung ähnliche Zusammensetzung haben. Die Viskosität kann dabei aber beispielsweise durch einen Verdicker erhöht sein. Der Verdicker kann ammoniakhaltig sein oder auf Natriumpolyacrylat-Basis eingesetzt werden. Der Gehalt an Verdicker in der Verbindungsschicht-Zusammensetzung liegt vorzugsweise in einem Bereich von 0,5 bis 10 Gewichtsteile auf 100 Gewichtsteile einer Bindemittel-Dispersion mit einem Feststoffgehalt von 40 Gew.% (wie beispielsweise ein Polyurethan).

Die Verbindungsschicht-Zusammensetzung wird vorzugsweise mit einem Rollcoater auf das Leder aufgetragen, besonders bevorzugt in einer Menge in einem Bereich von100 bis 280 g/qm, ganz besonders bevorzugt in einem Bereich von 120 bis 180 g/qm.

Anschließend wird das Trägermaterial mit der darauf aufgetragenen Verbindungsschicht vorzugsweise so auf die Silikonmatrize mit der wenigstens einen aufgetragenen Beschichtungsschicht aufgelegt, dass die zuletzt aufgetragene Beschichtungsschicht auf der Silikonmatrize mit der Verbindungsschicht kontaktiert wird.

Anschließend wird die Silikonmatrize mit dem darauf aufgelegten Trägermaterial vorzugsweise verpresst. Dies geschieht vorzugsweise mit einer oder mehreren Rollenpressen und/oder einer Vakuumpresse und/oder Plattenpresse.

Anschließend wird die Silikonmatrize mit dem darauf aufgelegten Trägermaterial vorzugsweise in einer Plattenpresse, gegebenenfalls mit beheizbaren Platten, verpresst, um die Verbindungsschicht mit der zuletzt aufgetragenen Schicht auf der Silikonmatrize untrennbar zu verbinden. Dabei wird die Temperatur, besonders bevorzugt der beheizbaren Platten, vorzugsweise in einem Bereich von 50 bis 80 °C eingestellt.

Vorzugsweise wird anschließend das aus Trägermaterial und der Beschichtung gebildete Verbundmaterial aus der Silikonmatrize entformt.

In einer weiteren Ausführungsform wird die der Erfindung zugrunde liegende Aufgabe gelöst durch die Verwendung des erfindungsgemäßen Trägermaterials und insbesondere des erfindungsgemäßen Leders für medizinische Anwendungen, wie beispielsweise Patientenliegen.

Die in der vorliegenden Beschreibung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Ausführungsbeispiel

Es wurde eine 1 m x 1 m große, 1 mm dicke Silikonmatrize auf einer ebenso großen 2 mm dicken Aluminiumplatte verklebt, die auf ihrer freien Oberfläche die negative Struktur eines Carbonfasergewebes aufwies. Die Silikonmatrize wurde auf 80 °C erwärmt. Auf diese Silikonmatrize wurde 185 g/m² einer wässrigen Oberschichtzusammensetzung aufgesprüht, um die Oberschicht zu erhalten. Diese Oberschichtzusammensetzung enthielt 80 Gewichtsteile einer Polyurethandispersion mit einem Feststoffgehalt von 40 Gew.%, 20 Gewichtsteile einer Polycarbonatdispersion mit einem Feststoffgehalt von 40 Gew.%., 2,5 Gewichtsteile einer Polysiloxandispersion (Griffmittel) mit einem Feststoffgehalt von 65 Gew.%., 6 Gewichtsteile einer Vernetzerdispersion (reaktive, aliphatische Polyisocyanatdispersion in Propylenglykoldiacetat) mit einem Feststoffgehalt von 80 Gew.%., 2 Gewichtsteile einer Pigmentdispersion (Schwarzpigment auf Rußbasis) mit einem Feststoffgehalt von 65 Gew.%. Das Dispersionsmedium war mit Ausnahme des Vernetzers jeweils Wasser. Der Vernetzer war in Propylenglykoldiacetat dispergiert.

Anschließend wurde diese Oberschicht bei 80 °C für 120 s getrocknet.

Nach der Trocknung der Oberschicht wurde eine Mittelschichtzusammensetzung in einer Menge von 170 g/m² auf die getrocknete Oberschicht aufgesprüht, um die Mittelschicht zu erhalten. Diese Mittelschichtzusammensetzung war eine für Zurichtungen von Lederoberflächen übliche Mischung aus Polyacrylat- und Polyurethandispersionen, wobei allerdings als Polyurethan ein Polyester-Polyurethan-Elastomer eingesetzt wurde, das sonst üblicherweise als Klebrohstoff zum Kaschieren oder Heißsiegeln eingesetzt wird.

Diese aufgesprühte Mittelschichtzusammensetzung wurde bei 65 °C für 180 s getrocknet.

Parallel wurde auf eine 1 m x 1 m große Spaltlederoberfläche aus Rindsspaltleder eine Verbindungsschicht in einer Menge von 120 g/m² mit einem Rollcoater aufgetragen. Das Rindsspaltleder war nachchromiert und fixiert. Die Zusammensetzung für die Verbindungsschicht bestand aus der Zusammensetzung für die Mittelschicht, die mit einem Verdicker auf Natriumpolyacrylatbasis in einer Menge von 5,5 Gewichtsteilen Verdicker auf 100 Gewichtsteile Polyester-Polyurethan-Dispersion verdickt worden war.

Die noch nasse Verbindungsschicht auf der Rindsspaltlederoberfläche wurde nun auf die Mittelschicht aufgelegt und zunächst mit einer Rollenpresse und mit einer Vakuumpresse mit sonst üblichem Andruck verpresst. Anschließend wurde die beschichtete Silikonmatrize mit dem Rindsspaltleder in einer Plattenpresse bei einer Temperatur von 70 °C mit einem sonst üblichen Andruck 0,7 bis 1,5 kg/cm² verpresst.

Nach der Verpressung wurde das beschichtete Rindsspaltleder aus der Silikonmatrize entformt.

Anschließend wurde eine In-vitro Irritation (MTT-Test, IL-1α ELISA) nach DIN EN ISO 10993-10:2013 durchgeführt.

Als Probe wurde das erfindungsgemäß beschichtete Spaltleder mit PU-Film/Echtleder nach DIN EN ISO 15987 verwendet. Für den Test wurde eine Oberfläche dieses Spaltleders in einer Größe von 0,5 cm² eingesetzt. Die Prüfung wurde gemäß dem internationalen Standard DIN EN ISO/IEC 17025:2005 durchgeführt.

Die Probe wurde unsteril in einem Kunststoffbeutel geliefert. Es gab keine Hinweise auf eine Beschädigung der Verpackung. Aus der Probe wurden drei kreisförmige Stücke mit einer Oberfläche von je 33,2 cm² ausgeschnitten und mittels Ethylenoxid sterilisiert. Aus diesen Stücken wurden für die Testung mit einem sterilen Skalpell drei 0,5cm² große Prüfkörper ausgeschnitten.

Es wurden 1% (v/v) Triton X-100 in destilliertem sterilem Wasser als Positivkontrolle und 1x PBS als Negativkontrolle verwendet.

Es wurden 1% (v/v) Triton X-100 in destilliertem sterilem Wasser als Positivkontrolle und 1x PBS als Negativkontrolle verwendet.

Die Kultivierung der rekonstruierten humanen Epidermis (RhE) erfolgte gemäß den Herstellerangeben. Die Proben (mit der PU-beschichteten Seite zur RhE gerichtet) und die Kontrollen wurden im Dreifachansatz auf die RhE-Replikate gegeben. Nach einer Inkubation bei 37°C für 24±2 Std in Wasserdampf-gesättigter Atmosphäre mit 5 % (v/v) CO₂ wurden die RhE für die Bestimmung der Sekretion des Entzündungsmarkers Interleukin 1-a (IL1-α) mehrfach mit 1x PBS gespült und weitere 24± 2 Std in RhE-Kultivierungsmedium inkubiert. Nach weiteren 24 Std wurde die RhE-Lebensfähigkeit/Proliferation mithilfe des MTT-Tests bestimmt. Dafür wurden die RhE für 3 Std in MTT-supplementiertem RhE-Kultivierungsmedium inkubiert (1 mg/ml), und im Anschluss das gebildete Formazan durch Inkubation mit 2 ml Isopropanol für 2 Std bei 37±1 °C extrahiert und bei 550nm spektrophotometrisch quantifiziert.

RhE und RhE-Kultivierungsmedium stammten von CellSystems Biotechnologie Vertrieb, 1xPBS von Biozyme Scientific GmbH, destilliertes steriles Wasser von LifeTechnologies, MTT, Triton X-100 und Isopropanol von Carl Roth und der IL-1α ELISA-Kit von Thermo Scientific.

Der MTT-Test wurde durchgeführt, um die Effekte der Probe auf die Lebensfähigkeit/Proliferation der RhE zu bestimmen. Die intrazelluläre Dehydrogenase-Aktivität ist ein indirekter Parameter der Zell-Lebensfähigkeit/Proliferation und entsprechend der Zytotoxizität. Nach Blindwert-Korrektur der Einzelwerte wurde für jedes Well (n=3) die mittlere Absorption bei 550 nm (A550) ermittelt.

Eine Reduktion des prozentualen Anteils lebensfähiger Zellen in Proliferation um mehr als 30% im Vergleich zur Negativ-Kontrolle ist als Hinweis auf einen zytotoxischen Effekt zu werten.

IL-1α wurde mit Hilfe eines ELISA und spektrophotometrischer Quantifizierung bestimmt (mittlere Absorption bei 450 nm nach Blindwert-Korrektur, n=3).

Der MTT-Test zeigte keine signifikanten Unterschiede (p > 0.05) in der RhE-Lebensfähigkeit/Proliferation nach RhE-Kultivierung mit der Probe und der Negativkontrolle. Die Reagenzkontrolle und die Positiv-/Negativ-Kontrollen bestätigten die Test-Sensitivität und -Genauigkeit.

Der IL-1α-ELISA zeigte keine signifikanten Unterschiede (p > 0.05) in der IL-1α Sekretion nach RhE-Kultivierung mit der Probe und der Negativkontrolle. Die Reagenzkontrolle und die Positiv-/Negativ-Kontrollen bestätigten die Test-Sensitivität und -Genauigkeit.

Ergebnis der Prüfung: aus der Probe wurden keine Substanzen in zytotoxischen Konzentrationen freigesetzt. Dies war mit bisherigem herkömmlich zugerichtetem Leder nicht möglich. Erstmals ist daher der Einsatz von zugerichtetem echtem Leder für medizinische Anwendungen wie Behandlungsliegen möglich.

## Patentansprüche

1. Beschichtetes Leder für medizinische Anwendungen, wobei die Beschichtung wenigstens zwei Beschichtungsschichten aufweist, **dadurch gekennzeichnet, dass** die Inhaltsstoffe des Leders fixiert sind, wobei die Beschichtung ein Flächengewicht in einem Bereich von 300 bis 600 g/m² aufweist.

2. Leder gemäß Anspruch 1, **dadurch gekennzeichnet, dass** die Beschichtung eine Dicke in einem Bereich von 100 bis 300 µm, ganz besonders bevorzugt in einem Bereich von mehr als 150 bis 250 µm aufweist.

3. Leder gemäß einem der Ansprüche 1 bis 2, **dadurch gekennzeichnet, dass** die mittlere Rauheit Rₐ der nicht beschichteten Lederoberfläche in einem Bereich von 20 bis 400 µm, ganz besonders bevorzugt in einem Bereich von 30 bis 150 µm liegt.

4. Leder gemäß einem der Ansprüche 1 bis 3, **dadurch gekennzeichnet, dass** die nicht beschichtete Lederoberfläche eine spezifische Oberfläche von wenigstens 2 m² pro 1 m² Grundfläche des Leders, ganz besonders bevorzugt eine spezifische Oberfläche von wenigstens 5 m² pro 1 m² Grundfläche des Leders aufweist.

5. Leder gemäß einem der Ansprüche 1 bis 4, **dadurch gekennzeichnet, dass** die Beschichtung ein Flächengewicht in einem Bereich von mehr als 400 bis 500 g/m² aufweist.

6. Lederoberfläche gemäß einem der Ansprüche 1 bis 5, **dadurch gekennzeichnet, dass** sie porenfrei ist.

7. Leder gemäß einem der Ansprüche 1 bis 6, **dadurch gekennzeichnet, dass** das Leder nachchromiert ist.

8. Leder gemäß einem der Ansprüche 1 bis 7, **dadurch gekennzeichnet, dass** die Beschichtung wenigstens eine Oberschicht, und eine Verbindungsschicht, und gegebenenfalls eine Mittelschicht aufweist.

9. Leder gemäß einem der Ansprüche 1 bis 8, **dadurch gekennzeichnet, dass** das Leder Spaltleder ist.

10. Verfahren zum Beschichten von Leder für medizinische Anwendungen, bei dem eine Beschichtung mit wenigstens zwei Beschichtungsschichten aufgetragen wird, **dadurch gekennzeichnet, dass** die Inhaltsstoffe des Leders vor der Beschichtung fixiert werden.

11. Verwendung des Leders gemäß einem der Patentansprüche 1 bis 10 für medizinische Anwendungen.

## Claims

1. A coated leather for medical applications, wherein the coating has at least two coating layers, **characterised in that** the leather ingredients are fixed, wherein the coating has a mass per unit area in a range from 300 to 600 g/m².

2. The leather according to claim 1, **characterised in that** the coating has a thickness in a range from 100 to 300 µm, very particularly preferably in a range from more than 150 to 250 µm.

3. The leather according to any one of claims 1 to 2, **characterised in that** the mean roughness Rₐ of the uncoated leather surface is in a range from 20 to 400 µm, very particularly preferably in a range from 30 to 150 µm.

4. The leather according to any one of claims 1 to 3, **characterised in that** the uncoated leather surface has a specific surface area of at least 2 m² per 1 m² of the leather base area, very particularly preferably a specific surface area of at least 5 m² per 1 m² of the leather base area.

5. The leather according to any one of claims 1 to 4, **characterised in that** the coating has a mass per unit area in a range from more than 400 to 500 g/m².

6. The leather surface according to any one of claims 1 to 5, **characterised in that** it is nonporous.

7. The leather according to any one of claims 1 to 6, **characterised in that** the leather is afterchromed.

8. The leather according to any one of claims 1 to 7, **characterised in that** the coating comprises at least one top layer and one connecting layer and optionally one middle layer.

9. The leather according to any one of claims 1 to 8, **characterised in that** the leather is split leather.

10. A method for coating leather for medical applications, wherein a coating with at least two coating layers is applied, **characterised in that** the leather ingredients are fixed prior to coating.

11. Use of the leather according to any one of claims 1 to 10 for medical applications.

## Revendications

1. Cuir enduit à usage médical, dans lequel l'enduction présente au moins deux couches d'enduction, **caractérisé en ce que** les constituants du cuir sont fixés, l'enduction présentant un poids par unité de surface situé dans une plage comprise entre 300 et 600 g/m².

2. Cuir selon la revendication 1, **caractérisé en ce que** l'enduction présente une épaisseur située dans une plage comprise entre 100 et 300 µm, de manière particulièrement préférée dans une plage comprise entre plus de 150 et 250 µm.

3. Cuir selon la revendication 1 ou 2, **caractérisé en ce que** la rugosité moyenne Ra de la surface de cuir non enduit se situe dans une plage comprise entre 20 et 400 µm, de manière particulièrement préférée dans une plage comprise entre 30 et 150 µm.

4. Cuir selon l'une quelconque des revendications 1 à 3, **caractérisé en ce que** la surface de cuir non enduit présente une surface spécifique d'au moins 2 m² pour 1 m² de surface de base du cuir, de manière particulièrement préférée une surface spécifique d'au moins 5 m² pour 1 m² de surface de base du cuir.

5. Cuir selon l'une quelconque des revendications 1 à 4, **caractérisé en ce que** l'enduction présente un poids par unité de surface situé dans une plage comprise entre plus de 400 et 500 g/m².

6. Surface en cuir selon l'une quelconque des revendications 1 à 5, **caractérisée en ce qu'**elle est exempte de pores.

7. Cuir selon l'une quelconque des revendications 1 à 6, **caractérisé en ce que** le cuir est tanné au chrome.

8. Cuir selon l'une quelconque des revendications 1 à 7, **caractérisé en ce que** l'enduction présente au moins une couche supérieure et une couche de liaison, et éventuellement une couche intermédiaire.

9. Cuir selon l'une quelconque des revendications 1 à 8, **caractérisé en ce que** le cuir est du cuir refendu.

10. Procédé d'enduction de cuir pour des applications médicales, dans lequel une enduction avec au moins deux couches d'enduction est appliquée, **caractérisé en ce que** les constituants du cuir sont fixés avant l'enduction.

11. Utilisation du cuir selon l'une quelconque des revendications 1 à 10 pour des applications médicales.
